# EUROPEAN PATENT SPECIFICATION

(11) **EP 1 226 640 B1**
(45) Date of publication and mention of the grant of the patent: **01.10.2003**
(21) Application number: 00976220.4
(22) Date of filing: 01.11.2000
(51) Int. Cl.: H02B 11/18

(54) **LINE CIRCUIT-BREAKER DEVICE WITH SIDE CONTROL**
LEITUNGSSCHUTZSCHALTER MIT SEITLICHER STEUERUNG
DISJONCTEUR DE LIGNE AVEC COMMANDE LAT RALE

(30) Priority: 03.11.1999 IT PC990037
(43) Date of publication of application: 31.07.2002
(73) Proprietor: VEI Power Distribution S.p.A., 20123 Milan (IT)
(72) Inventor: VAGHINI, Alberto, I-29100 Piacenza (IT)
(74) Representative: De Gregori, Antonella
(86) International application number: IB0001790
(87) International publication number: WO01033683

(56) References cited:
- FR-A- 2 689 305

## Description

The present invention refers to a line circuit-breaker device with side control, designed to be used both in switchboards or secondary electric stations and in primary electric stations.

The electrical energy transferred with very high power levels on the transmission system and distributed in the various areas by the sub-transmission systems is delivered to the individual user systems and plants by means of distribution systems. With reference to such systems, residential loads are supplied directly at the voltage of the user apparatus (low voltage), whilst the power necessary for small and medium-sized industrial firms, where the loads in general are made up of a complex of low-voltage apparatus, is supplied at a higher voltage (medium voltage or MV), obtained by means of transformation, in primary stations, from the sub-transmission system and/or from the transmission system. Individual users with high loads, such as major industrial complexes, are connected directly to the high-voltage sub-transmission grid.

For reasons of economy, primary electric stations must be as small-sized as possible, and this can be achieved by using structural characteristics, which are of themselves traditional, in which, for the high-voltage section, it is possible to adopt a simple disconnectable bus bar, to which there are connected, in bypass fashion, the feeder lines and possibly one or two HV user lines.

For the MV section, it is possible to adopt a scheme with a simple shifting bus bar. To obtain greater compactness, apparatus enclosed in sheet-metal housings is moreover used, where the conductors are housed in metal casings, with insulators that keep the conductors at a distance from the walls of the casings, or are immersed in appropriate insulating material, or sealed in a vacuum envelope (the so-called vacuum circuit breakers).

At present, electric stations of the primary type usually comprise a series of electrical devices (generally consisting of a circuit breaker combined with a line-isolating switch and of an earthing switch set downstream of the aforementioned circuit breaker, on a line which leads to the user loads), which connect the bus bars to the output contacts directed to the loads.

These types of apparatus normally operate in the medium-voltage (1-52 kV) range and use circuit-breaker devices which comprise a fixed internal contact and a movable contact which are designed to interact together for the purpose of opening and closing the electrical circuit. Both of the internal contacts are connected, by means of appropriate input and output conduction bars, to respective output terminals which are usually located in points corresponding to the external casing of the electric station.

In particular, the required operations of connection and disconnection from the feeder line are performed by means of a series of electrical insulators, one for each pole, each of which contains a circuit-breaker device; namely, the insulators have an electrical contact of the flexible-braid type or clip type on their tops and are free to slide in a vertical direction, moved by special apparatus in such a way as to ensure electrical continuity by means of insertion of the corresponding bus bar, which is kept fixed in position on the other side of a segregation wall, inside the clip contact.

In addition, usually the insulators are positioned on a removable carriage which enables them to be taken out of the station in a simple way so as to enable maintenance operations and repair operations to be carried out more conveniently.

On the other hand; the electric stations of a secondary type are normally equipped with electrical insulators that are of a decidedly small height as compared to the ones used in primary stations. Furthermore, the corresponding electrical contacts are made in a lateral position of the insulator in such a way that the circuit is alternatively opened and closed by means of movement of bus bars, which are connected at one of their ends to a bus bar section-disconnector. A line circuit-breaker device according to the preamble of claim 1 is known, for example, from FR-A-2 689 305.

From the above description it is, however, clear that the apparatus traditionally used in electric stations of the so-called secondary type cannot be used in primary stations, and vice versa. In addition, even when the transformation is in some way possible, additional advantages of one or the other solution, such as the compactness of the structure, the reduction in transverse dimensions, the efficiency, transportability, and safety of use both in emergency conditions and in stationary conditions, as well as the structural modularity, cannot all be achieved.

A purpose of the present invention is therefore that of overcoming the problems mentioned above, and in particular that of providing a line circuit-breaker device with side control which can be used indifferently both in switchboards or secondary electric stations and in primary electric stations, and which at the same time presents the same advantageous characteristics of both uses.

Another purpose of the present invention is to provide a line circuit-breaker device with side control in a fixed version, for use generally in switchboards or secondary electric stations, which can be converted into a line circuit-breaker device, again with a side control, but which is isolatable vertically and extractable horizontally in order to enable its use in primary electric stations.

A further purpose of the present invention is to provide a line circuit-breaker device, with a side control for on-line vertical isolation and horizontal extraction, which is particularly reliable, effective and safe and is designed to be used for installation in electric switchboards, the operations of maintenance, repair and replacement of parts being facilitated as compared to the known art.

Not the least important purpose of the present invention is to provide a line circuit-breaker device with side control at contained costs and without employing complex or costly technologies.

The above purposes are achieved by a line circuit breaker with side control designed to be used both in switchboards or secondary electric stations and in primary electric stations, in accordance with Claim 1.

Advantageously, said line circuit-breaker device can be installed indifferently in primary and secondary installed indifferently in primary and secondary stations, the transverse dimensions of which being effectively reduced with respect to those of the known art even though the required insulation distances in air or in a vacuum are maintained. Consequently, using the line circuit-breaker devices described, it is possible to create electric-power distribution systems of a modular and compact type, which can be easily repaired and transported.

In particular, using circuit-breaker devices which have a compact and light structure, it is possible to arrange the electrical equipment inside the stations according to modular structures. In this way, isolating devices are obtained for medium voltages which present excellent mechanical and electrical characteristics and which, at the same time, can be installed both in secondary electric stations and in primary stations without any need to replace the structure of the station (with the consequent risk, among other things, of putting it out of use) and without any need to dismantle or rearrange the apparatus contained therein.

Further purposes and advantages of the present invention will emerge clearly from the ensuing description and from the annexed drawings, which are provided purely to furnish explanatory and non-limiting examples, and in which:
- Figure 1 shows a circuit diagram of a secondary electric power station;
- Figure 2 is a schematic side view of a first embodiment of line circuit-breaker devices with side control, designed to be used both in switchboards or secondary electric stations and in primary stations,
- Figure 3 is a schematic front view of the embodiment illustrated in the previous figure;
- Figure 4 is an enlarged cross-sectional partial view of a detail of one of the line circuit-breaker devices of Figure 2;
- Figure 5 is a partially sectional top view of the detail represented in Figure 4;
- Figure 6 is a side view of an electric power station comprising a series of line circuit-breaker devices with side control, built according to an embodiment alternative to that of Figure 2.
- Figure 7 is a front view of the electric station of Figure 6;
- Figure 8 is a side view of a series of line circuit-breaker devices with side control, made as in Figure 6, and
- Figure 9 is a partial top view of the devices of Figure 8.

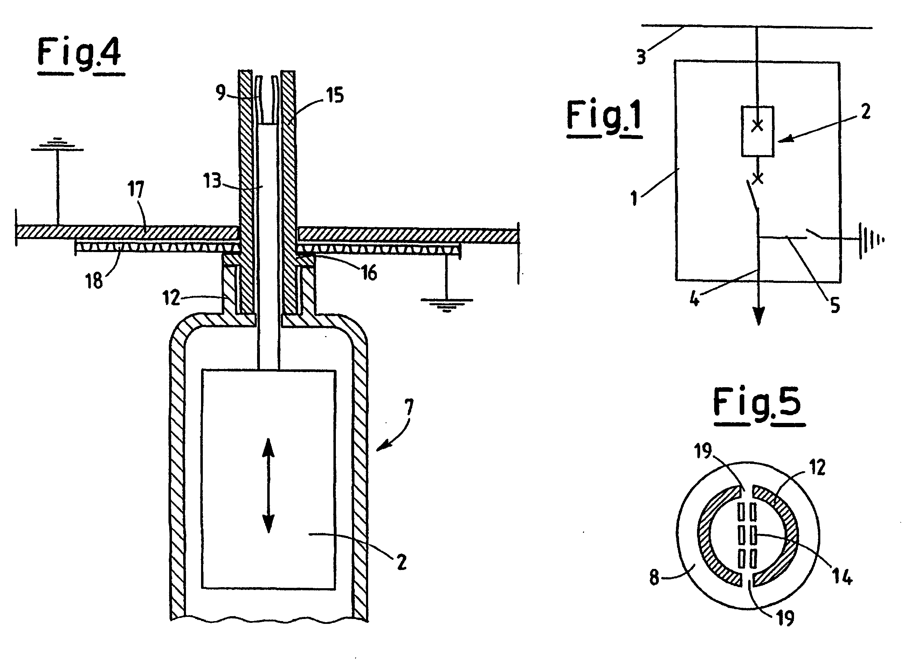

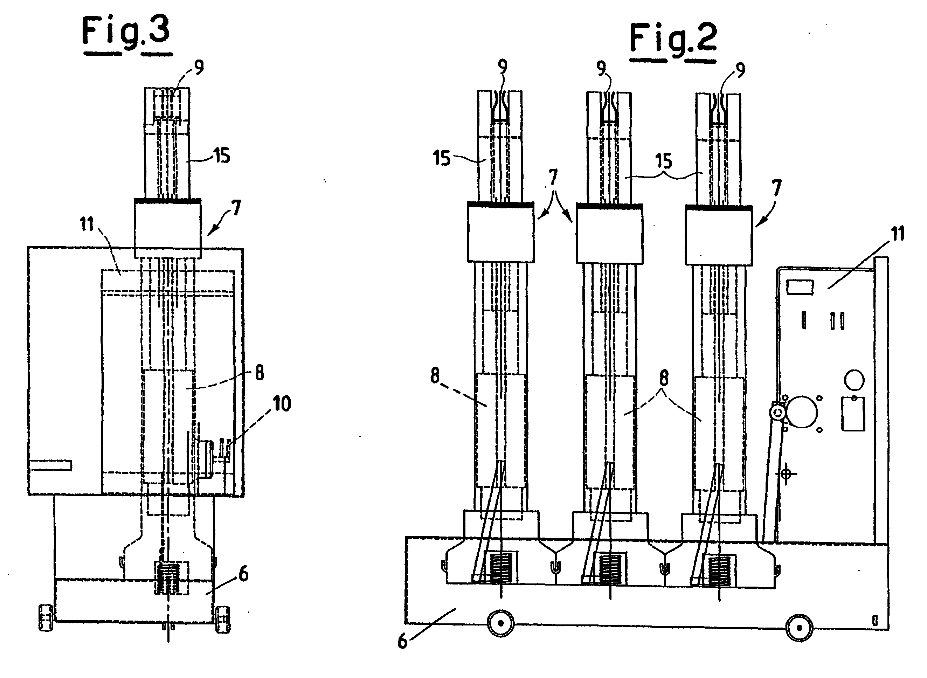

With particular reference to Figures 1-5, the number 1 designates an electric power station comprising isolating devices under load and circuit breakers, designated in general by 2, connected on one side to bus bars 3 and on the other side to an output 4 directed to the load.

An earthing switch 5 is inserted between the output line 4 and the isolating devices, and has the function of connecting the output 4 to earth when the circuit-breaker devices are open, in order to gain access to the inside of the electric power station 1.

Inserted in the station 1 is an extractable carriage 6, on which a series of electrical insulators 7 are mounted, one for each pole or phase of the line, each of said insulators 7 being provided inside with a line circuit-breaker device 8. The carriage 6 may be mounted on a liftable support which enables the insulators 7 to be raised and lowered as desired in such a way as to make possible on-line activation and deactivation of the line circuit-breakers 8 as required by means of connection or disconnection of the electrical contacts 9, 10, which are located, respectively, in the top area and median area of each insulator 7 on the bus bars 3 and 21.

A control panel 11 carries the various control instruments, as well as the actuation devices for the carriage 6 and for the entire structure.

In the embodiment in question, which is provided as a non-limiting example, of the line circuit-breaker device represented in Figures 1-5, the body of the insulator 7, in which the line circuit-breaker 8 is contained, is provided at the top with an attachment for receiving a hollow insulating body 15, which is designed to be fitted through a segregation wall of the station 1 and contains at least one electrical contact for engagement with bus bars 3 in order to close the line circuit.

The insulating body 15 is removable together with the insulator 7 and may present a notch on the base for passage of an electrical connection which enables the device to be used in electric stations of the secondary type, in which the bus bars are connected to a bus bar section-disconnector.

In particular, the insulator 7, in its top portion, has a circular or polygonal edge 12 in an area corresponding to the opening through which a stem 13, provided at the top with an electrical contact 9 of the clip or spring type, comes out, the said electrical contact 9 being designed to engage with the bus bars 3. Inserted in the seat defined by the top edge 12 is the hollow insulating body 15, which is provided with an edge in relief 16 designed to rest against the segregation wall 17 of the switchboard.

Advantageously, inserted between the edge 12, the body 15, and the wall 17 is a further layer 18 made of insulating material, for example a silicon rubber ring, in order to provide a seal for the electric arc.

In addition, in the top edge 12 of the insulator 7 are made one or more notches 19 designed to enable passage of an electrical connection (not illustrated in the figures and in itself known) usable for connection to the bus bars of electric stations of a secondary type.

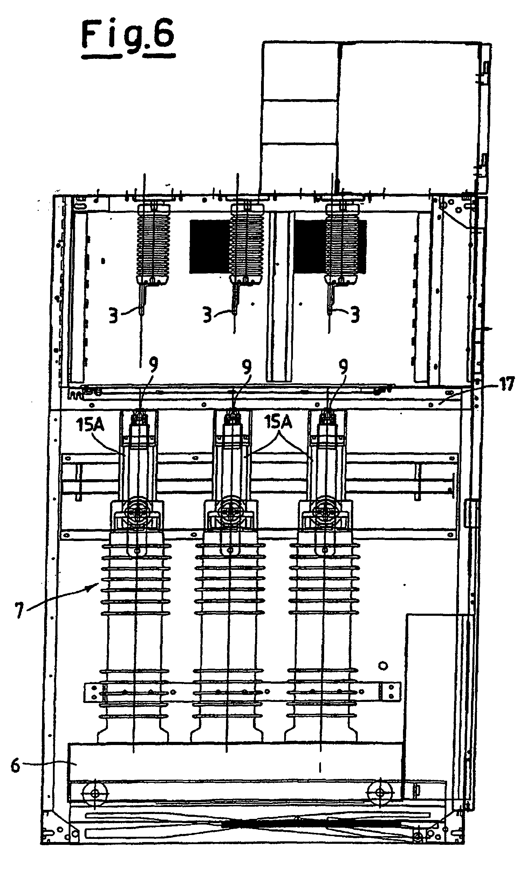

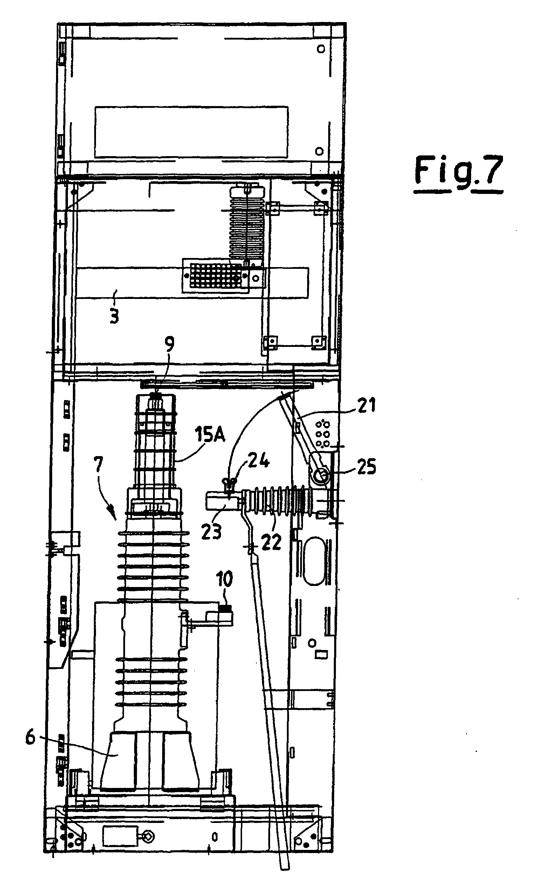

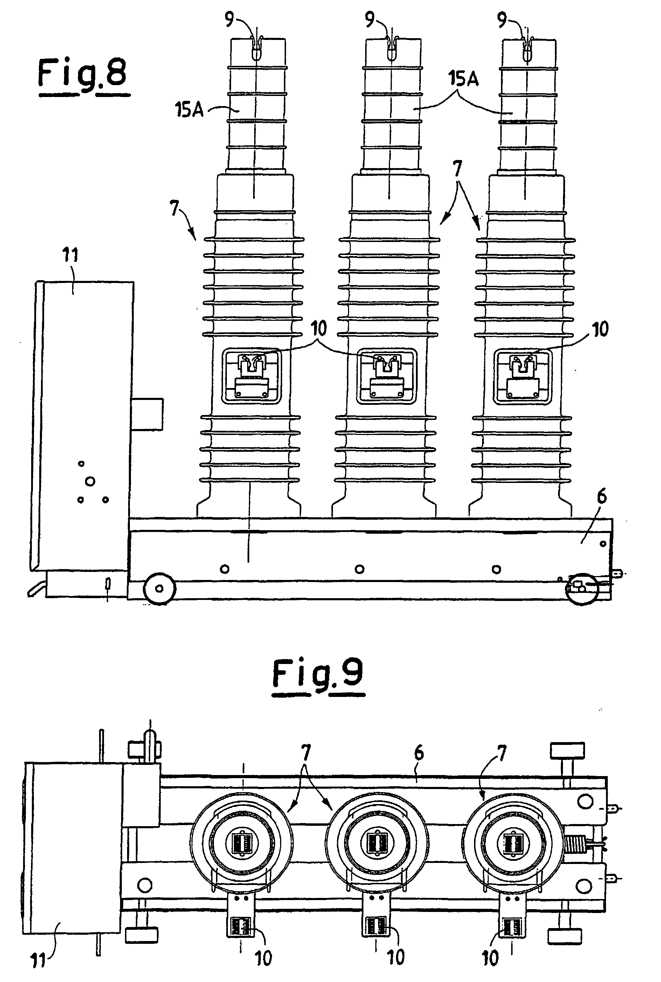

In an embodiment which is alternative and preferred to the foregoing one and is illustrated in Figures 6-9, there is arranged a removable insulating body 15A above the insulator 7, set so that it is in contact with the latter's top surface and fixed in position by appropriate clamping means, in order to enable use of the circuit-breaker device according to the present invention in primary stations, in which a vertical isolating operation is usually carried out.

The body 15A comprises an electrical contact 9, which is positioned on the top thereof and is electrically connected to the circuit breaker 8 and which engages on the bus bar 3 on the other side of the segregation wall 17 in the case where the line circuit breaker 8 is activated.

According to the present invention, it is possible to use the same circuit breaker 8 in electric stations of the secondary type, in which the electrical contact 10, set on the side of the insulator 7, is designed to engage on the conductive portion 23 carrying the electrical contact 24 on which, when the circuit breaker 8 is activated, the bus bar 21 is fitted, the said bus bar 21 being connected in 25 to a connection element of a cable with earthing isolating switch 22.

In practice, using the removable insulating body 15A it is possible to convert a circuit breaker in fixed version and normally extractable from an electric power station of the secondary type into a vertically isolatable circuit breaker for electric stations of the primary type.

The characteristics, as well as the advantages, of the line circuit-breaker device with side control designed to be used both in switchboards or secondary electric stations and in primary electric stations, which forms the subject the present invention, emerge clearly from the foregoing description.

In particular, the advantages are the following:
- possibility of converting a circuit breaker with side control, in fixed version, designed for use generally in switchboards or secondary electric stations into an on-line vertically isolatable and horizontally extractable circuit breaker with side control for use mainly in primary electric stations;
- safety in the circuit-interruption manoeuvres;
- modularity of the overall structure; and
- ease and rapidity of installation.

## Claims

1. A line circuit-breaker device with side control, of the type comprising:
― a plurality of electrical insulators (7) containing corresponding circuit breakers (8), designed for closing the electrical circuit between a set of first (3) and second (21) bus bars and at least one output line (4) directed to the loads,
― on at least one top portion of each insulator (7), at least one removable insulating body (15,15A) containing at least one first electrical contact (9) for connection with at least one of said set of first bus bars (3) of electric stations (1) of a primary type,
**characterised in that**
― each insulator (7) further has at least one second lateral electrical contact (10) for connection with at least one of said set of second bus bars (21) of electric stations of a secondary type,
― said second electrical contact (10) is designed to engage on a conductive portion (23) that carries a further electrical contact (24), on which, when the circuit breaker (8) is activated, said at least one of said second bus bars is fitted,
― each bus bar of said second set of bus bars (21) is connected to a connection element of a cable with earthing isolating switch (22) of electric stations (1) of a secondary type,
― said insulators (7) are mounted on an extractable carriage (6) which is provided on a liftable support which enables said insulators (7) to be raised and lowered as desired in order to activate or disactivate said circuit breakers (8) by means of connection or disconnection of said first electrical contacts (9) on said set of first bus bars (3), and of said second electrical contacts (10) on said set of second bus bars (21).

2. A circuit-breaker device according to Claim 1, **characterized in that** at least one earthing switch (5) is inserted between said output line (4) and a plurality of disconnecting and isolating apparatus, said switch (5) being provided in order to connect to earth said output line (4) when said circuit breakers (8) have opened the circuit, in order to enable access to be gained to the inside of said substation.

3. A circuit-breaker device according to Claim 1, **characterized in that** said insulator (7) has, in one of its top portions, a circular or polygonal edge (12) at an opening through which a stem (13) comes out, said stem (13) being provided, at its top, with said first electrical contact (9) of the clip or spring type, designed to engage with said first bus bars (3), sliding beyond a segregation wall (17).

4. A circuit-breaker device according to Claim 1, **characterized in that** said removable insulating body (15A) is set at the top of each insulator (7) and is fixed in position by appropriate clamping means.

## Patentansprüche

1. Leistungsschaltereinrichtung mit Seitensteuerung von der Art mit:
- einer Vielzahl von elektrischen Isolatoren (7), die entsprechende Leistungsschalter (8) enthalten, die dafür entworfen sind, den elektrischen Kreis zwischen einem Satz von ersten (3) und zweiten (21) Sammelschienen und mindestens einer Ausgangsleitung (4), die zu den Lasten führt, zu schließen,
- an zumindest einem oberen Abschnitt jedes Isolators (7) mindestens einem entfernbaren Isolierkörper (15, 15A), der mindestens einen ersten elektrischen Kontakt (9) zur Verbindung mit mindestens einer von dem Satz von ersten Sammelschienen (3) von elektrischen Stationen (1) eines primären Typs enthält,
**dadurch gekennzeichnet, dass**
- jeder Isolator (7) ferner mindestens einen zweiten seitlichen elektrischen Kontakt (10) zur Verbindung mit mindestens einer von dem.Satz von zweiten Sammelschienen (21) von elektrischen Stationen eines sekundären Typs aufweist,
- der zweite elektrischen Kontakt (10) entworfen ist, um mit einem leitfähigen Abschnitt (23) in Eingriff zu gelangen, der einen weiteren elektrischen Kontakt (24) trägt, auf den bei aktiviertem Leistungsschalter (8) die mindestens eine von den zweiten Sammelschienen gesetzt ist,
- jede Sammelschiene von dem zweiten Satz von Sammelschienen (21) mit einem Verbindungselement eines Kabels mit einem Erdungstrennschalter (22) von elektrischen Stationen (1) eines sekundären Typs verbunden ist,
- die Isolatoren (7) an einem herausziehbaren Schlitten (6) montiert sind, der an einem anhebbaren Träger vorgesehen ist, welcher es ermöglicht, dass die Isolatoren (7) wie gewünscht angehoben und abgesenkt werden können, um die Leistungsschalter (8) mittels einer Verbindung oder Trennung der ersten elektrischen Kontakte (9) an dem Satz von ersten Sammelschienen (3) und der zweiten elektrischen Kontakte (10) an dem Satz von zweiten Sammelschienen (21) zu aktivieren oder zu deaktivieren.

2. Leistungsschaltereinrichtung nach Anspruch 1, **dadurch gekennzeichnet, dass** mindestens ein Erdungsschalter (5) zwischen die Ausgangsleitung (4) und eine Vielzahl von Trennung- und Isoliervorrichtungen gesetzt ist, wobei der Schalter (5) vorgesehen ist, um die Ausgangsleitung (4) mit Erde zu verbinden, wenn die Leistungsschalter (8) den Kreis geöffnet haben, damit Zugang zum Inneren der Unterstation gewonnen werden kann.

3. Leistungsschaltereinrichtung nach Anspruch 1, **dadurch gekennzeichnet, dass** der Isolator (7) an einem seiner oberen Abschnitte eine kreisförmige oder polygone Kante (12) an einer Öffnung, durch die ein Schaft (13) austritt, aufweist, wobei der Schaft (13) an seiner Oberseite mit dem ersten elektrischen Kontakt (9) vom Klammeroder Federtyp versehen ist, der entworfen ist, um mit den ersten Sammelschienen (3) in Eingriff zu gelangen, wobei er sich über eine Trennungswand (17) hinaus verschiebt.

4. Leistungsschaltereinrichtung nach Anspruch 1, **dadurch gekennzeichnet, dass** der entfernbare Isolierkörper (15A) an die Oberseite jedes Isolators (7) gesetzt und in seiner Lage durch ein geeignetes Klemmmittel fixiert ist.

## Revendications

1. Disjoncteur de ligne avec commande latérale, du type comprenant :
une pluralité d'isolateurs électriques (7) contenant des disjoncteurs de circuit (8) correspondants, conçus pour fermer le circuit électrique entre un ensemble de premiers (3) et seconds (21) jeux de barres et au moins une ligne d'entrée (4) dirigée vers les charges,
sur au moins une partie supérieure de chaque isolateur (7), au moins un corps isolant amovible (15,15A) contenant au moins un premier contact électrique (9) pour connexion avec au moins un dudit ensemble de premier jeu de barres (3) de postes électriques (1) d'un type primaire, **caractérisé en ce que**
chaque isolateur (7) a en outre au moins un second contact électrique latéral (10) pour connexion avec au moins un dudit ensemble de second jeu de barres (21) de postes électriques d'un type secondaire,
ledit second contact électrique (10) est conçu pour s'enclencher sur une partie conductrice (23) qui porte un autre contact électrique (24), sur lequel, lorsque le disjoncteur (8) est activé, ledit au moins un desdits seconds jeux de barres est installé,
chaque jeu de barres dudit second ensemble de jeux de barres (21) est connecté à un élément de connexion d'un câble avec sectionneur d'isolation à la terre (22) de postes électriques (1) d'un type secondaire,
lesdits isolateurs (7) sont montés sur un chariot extractible (6) qui est proposé sur un support soulevable qui permet aux dits isolateurs (7) d'être levés et abaissés selon les besoins afin d'activer ou de désactiver lesdits disjoncteurs (8) au moyen de la connexion ou de la déconnexion desdits premiers contacts électriques (9) sur ledit ensemble de premiers jeux de barres (3), et desdits seconds contacts électriques (10) sur ledit ensemble du second jeu de barres (21).

2. Disjoncteur selon la revendication 1, **caractérisé en ce qu'**au moins un sectionneur de mise à la terre (5) est inséré entre ladite ligne de sortie (4) et une pluralité de dispositifs de déconnexion et d'isolation, ledit sectionneur (5) étant proposé afin de connecter à la terre ladite ligne de sortie (4) lorsque lesdits disjoncteurs (8) ont ouvert le circuit, afin de permettre d'accéder à l'intérieur dudit poste.

3. Disjoncteur selon la revendication 1, **caractérisé en ce que** ledit isolateur (7) a, dans une de ses parties supérieures, un bord circulaire ou polygonal (12) à une ouverture à travers laquelle une tige sort, ladite tige (13) étant équipée à son sommet, dudit premier contact électrique (9) du type pince ou ressort, conçu pour s'enclencher sur ledit premier jeu de barres (3), glissant au-delà d'une paroi de séparation (17).

4. Disjoncteur selon la revendication 1, **caractérisé en ce que** ledit corps isolant amovible (15A) est installé au sommet de chaque isolateur (7) et est fixé en position par des moyens de fixations appropriés.
